# EUROPÄISCHE PATENTSCHRIFT

(11) **EP 1 987 272 B1**
(45) Veröffentlichungstag und Bekanntmachung des Hinweises auf die Patenterteilung: **07.04.2010**
(21) Anmeldenummer: 07702871.0
(22) Anmeldetag: 18.01.2007
(51) Int. Cl.: F16J 15/06, F16J 15/08, F02F 11/00

(54) **ZYLINDERKOPFDICHTUNG MIT KANAL**
CYLINDER HEAD GASKET WITH DUCT
JOINT D'ETANCHEITE A CANAL POUR TETE DE CYLINDRE

(30) Priorität: 22.02.2006 DE 102006008270
(43) Veröffentlichungstag der Anmeldung: 05.11.2008
(73) Patentinhaber: Federal-Mogul Sealing Systems GmbH, 57562 Herdorf (DE)
(72) Erfinder: KLINNER, Manfred, 53844 Troisdorf (DE)
(74) Vertreter: Kurig, Thomas
(86) Internationale Anmeldenummer: PCT/EP2007/000438
(87) Internationale Veröffentlichungsnummer: WO 2007/096032

(56) Entgegenhaltungen:
- EP-A2- 1 083 371
- DE-A1- 1 907 682
- DE-A1- 2 723 576
- DE-A1- 3 242 526
- DE-A1- 4 215 217
- JP-A- 7 224 938
- US-A- 4 211 205
- US-A- 5 853 175

## Beschreibung

Die vorliegende Erfindung betrifft eine Metall-Elastomer-Dichtung und insbesondere eine Zylinderkopfdichtung, die für den Einsatz in Verbrennungskraftmaschinen geeignet ist. Die Zylinderkopfdichtung weist neben einer oder mehreren Dichtungslagen aus Metall mindestens eine Brennraumabdichtung, sowie eine Elastomerdichtung auf, die um die Brennraumabdichtung verläuft. Durch mindestens eine in der Ebene der Zylinderkopfdichtung angeordnete Öffnung bzw. Bohrung wird Kühlflüssigkeit geleitet, um die zwischen Motorblock und Zylinderkopf entstehende Wärme abzuführen. Beispielsweise soll im Fall der Beschickung des Motorblocks mit Kühlfluid eine Entgasung ermöglicht werden, so dass eine Ableitung von in dem System verbleibender Luft und/oder Gas in einem Fluiddurchfluß zwischen Motorblock, Zylinderkopf-Flachdichtung Zylinderkopf ermöglicht wird.

Zur Erhöhung und Absicherung der Dichtwirkung einer metallischen Dichtung über einen längeren Zeitraum ist es üblich, um die verschiedenen Durchgangsöffnungen in mindestens einer der Lagen einer derartigen Flachdichtung eine Dichtfunktion auszubilden, die diese Durchgangsöffnungen in der Regel vollständig umschließt. Durch die Dichtfunktion, gewöhnlich eine Sicke oder ein Elastomerprofil, wird dann eine entsprechende Dichtlinie erzeugt. Hierbei werden je nach Anforderung üblicherweise eine oder mehrere Sicken zur Abdichtung von Hochdruckbereichen, beispielsweise eines Brennraums, und Elastomerprofile zur Abdichtung von Niedruckbereichen, beispielsweise von Kühlfluiddurchflüssen oder zum Schutz des Motorblocks gegen witterungsbedingte Umwelteinflüsse, verwendet.

Derartige metallische Dichtungen mit Sicke oder Elastomerprofil werden gewöhnlich zur Abdichtung von Brennkammern einer entsprechenden Kraftmaschine und insbesondere als Zylinderkopfdichtungen eingesetzt. Als Zylinderkopfdichtungen haben sich Metalldichtungen durchgesetzt, die häufig aus mehreren Lagen und vorzugsweise aus Stahl bestehen, wobei die erforderliche Elastizität dadurch hergestellt wird, dass mindestens eine der Lagen eine die Brennraum-Durchgangsöffnung umgebende Sicke aufweist. Bei neueren Verbrennungsmotoren werden zunehmend die Zylinderkopfdichtungen überwiegend aus Aluminium und der Zylinderblock überwiegend aus Magnesium gefertigt.

Da sich während des Betriebs eines Verbrennungsmotors die Breite oder Weite des die Zylinderkopfdichtung aufnehmenden Dichtspalts zwischen Motorblock und Zylinderkopf periodisch in Abhängigkeit vom Arbeitstakt des jeweils betrachteten Zylinders ändert, ist die Zylinderkopfdichtung im Motorbetrieb ständigen Pressungsänderungen unterworfen. Bei den Zylinderkopfdichtungen der bereits erwähnten Art erfolgt die Abdichtung um eine Brennraumöffnung herum zumindest im wesentlichen durch eine die Brennraumöffnung umschließende Abdichtsicke, welche zur Aufrechterhaltung einer einwandfreien Abdichtung wegen der vorstehend beschriebenen Dichtspaltänderungen dauerhaft federelastische Eigenschaften aufweisen muss, das heisst die Abdichtsicke muss auch noch nach langer Motorbetriebsdauer in Richtung senkrecht zur Dichtungsplattenebene federelastisch verformbar sein. Gleiches gilt in geringerem Umfang für die Elastomerprofile, die zur Abdichtung des Niederdruckbereiches verwendet werden.

Vielfach kommen in heutigen Brennkraftmaschinen Zylinderkopfdichtungen zum Einsatz, bei denen jeweils zur dauerhaft elastischen Brennraumabdichtung in Federstahl geprägte so genannte Vollsicken verwendet werden. Vollsicken zeichnen sich dadurch aus, dass, ausgehend von einer Grundfläche des Bleches, eine Erhebung in eine Richtung geformt wird, so dass eine Kontaktlinie (Sickenkamm) zu der der Grundfläche abgewandten Seite als Abdichtlinie gebildet wird. Vollsicken stützen sich in der Ebene der Grundfläche immer mit beidseitig des Sickerkamms angeordneten so genannten Sickenfüssen ab, d.h. in der Ebene der Grundfläche bilden sich zwei Abdichtlinien heraus. Diese Grundkonstruktion einer Vollsicke benötigt ein Mindestmass an Platz im Querschnitt und muss durch relativ komplexe Prägewerkzeuge geformt werden.

In der US-B 6,530,575 wird eine Dichtung beschrieben, die einen aus einem weichen Stahl bestehenden Metallkern beinhaltet, der im Bereich beider Dichtflächen vollständig mit einer Elastomerschicht versehen ist. Zur besseren Verklammerung des Elastomermaterials weist der Metallkern Durchbrüche und bedarfsweise auch Abbiegungen auf. Das Elastomermaterial wird kalt auf der zugehörigen Oberfläche aufgebracht und in einer erhitzten Form ausgehärtet, ehe es vulkanisiert wird. Im Elastomermaterial sind Profile eingebracht, die einen dreieckigen Querschnitt aufweisen.

Die DE4438879 betrifft eine ein- oder mehrlagige metallische Zylinderkopfdichtung für Verbrennungskraftmaschinen mit Vorverbrennungskammer, wobei ein die Vorverbrennungskammer aufweisendes Bauteil in den Zylinderkopf eingebaut ist und im montierten Zustand der Dichtung mit einer Bodenfläche auf der Dichtung aufliegt, sowie mindestens einer außerhalb der Bodenfläche verlaufende, die Brennraumöffnung umschließende Sicke. Um die thermische Belastung im Bereich der Vorverbrennungskammer zu erniedrigen, wird weiterhin der Sicke im Bereich des Außenrandes des Bauteils ein bogenförmiger Schlitz vorgelagert ist, so dass der Wärmetransport in diesem Bereich vom Bauteil zur Sicke unterbunden ist.

In der gattungsgemäßen EP1083371 wird eine Zylinderkopfdichtung beschrieben, bei der ein Eindringen von Verbrennungsgasen in den Kühlwasserkreislauf durch eine entsprechende Anordnung der Dichtungsmittel vermieden wird.

DE4215217 A1 offenbart eine Zylinderkopfdichtung, wobei die Flüssigkeitsöffnungen beidseitig durch elastomere Auflagen umgeben werden.

Die im vorstehenden Stand der Technik beschriebenen Zylinderkopfdichtungen weisen alle den Nachteil auf, dass bei einem Betrieb des Motorblocks mit Kühlfluid entsprechende Luft in dem System verbleibt und nicht abgeführt werden kann. Luft kann beispielsweise in Form von kleinen Luftbläschen in einer Bohrung des Motorblocks entstehen und sich der metallischen Dichtung anlagern, was zu deren Korrosion führen kann. Ebenso können im Betrieb des Motors heiße Verbrennungsgase aus einer unter Umständen defekten Brennraumabdichtung austreten und wiederum zur Korrosion von metallischen Materialien führen.

Eine Aufgabe der vorliegenden Erfindung besteht daher darin, eine Möglichkeit zu schaffen, vorhandene Luft und/oder Gase, die beispielsweise beim Betrieb des Motorbocks entstehen können, abzuführen und somit Korrosion von metallischen Bauteilen zu vermeiden.

Eine weitere Aufgabe der vorliegenden Erfindung besteht darin, ein Eindringen von Gasen, insbesondre von heißen Verbrennungsgasen, in unerwünschte Bereiche des Motorblocks zu vermeiden.

Die vorstehenden Aufgaben wurden durch die Bereitstellung der erfindungsgemäßen Zylinderkopfdichtung gelöst. Die Zylinderkopfdichtung umfasst im Wesentlichen eine oder mehrere metallische Dichtungslagen und eine oder mehrere und zur Abdichtung des Hochdruckbereichs geeignete Brennraumabdichtungen. Der Ausdruck Hochdruckbereich betrifft hierbei den von einer Brennraumabdichtung umschlossen Bereich. Weiterhin ist bevorzugt eine zur Abdichtung eines Niedruckbereichs geeignete Elastomerdichtung um die Brennraumabdichtung(en) angeordnet. Beim Betrieb des Motors mit Kühlfluid kommt es häufig vor, dass Gase und/oder Luft in dem Motorblock in der Ebene der Zylinderkopfdichtung verbleiben oder teilweise oder vollständig durch eine in der Ebene der Dichtung gebildete Kühlmittel-Öfnung abgeführt werden. Gemäß der vorliegenden Erfindung weist die Ebene der Zylinderkopfdichtung in mindestens einer der Dichtungslagen einen Kanal auf, der ein gezieltes Ableiten der Gase und/oder Luft durch diese Kühlmittel-Öffnung gewährleistet.

Dadurch wird sichergestellt, dass im Zustand der eingebauten Zylinderkopf-Flachdichtung ein beispielsweise durch den darunterliegenden Motorblock herangeführtes Fluid, also Gas oder Flüssigkeit, durch den Kanal zu einer Kühlfluid-Öffnung der Zylinderkopfdichtung transportiert wird, durch die das Fluid geeignet abtransportiert wird.

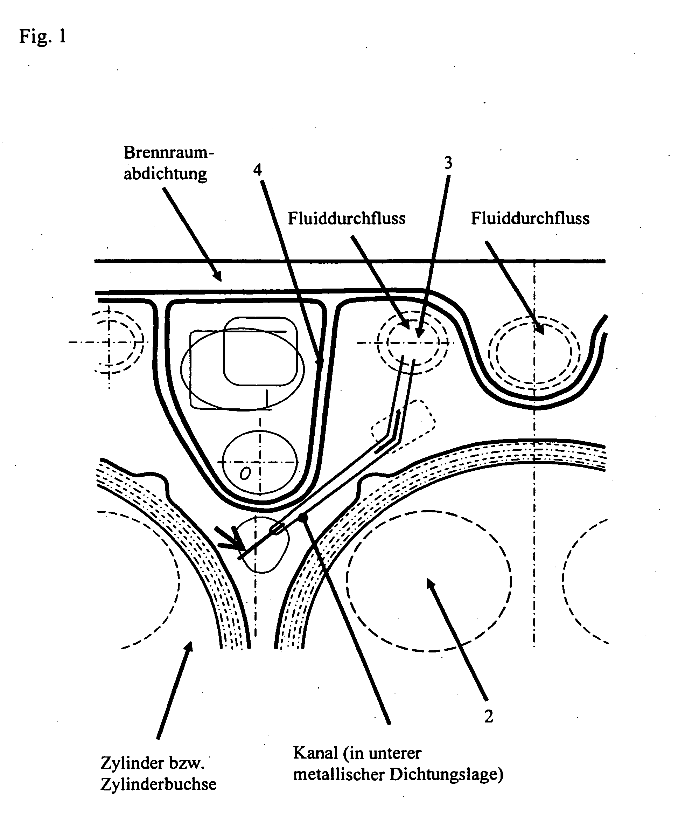

- Fig. 1: zeigt eine Aufsicht auf eine Zylinderkopfdichtung.

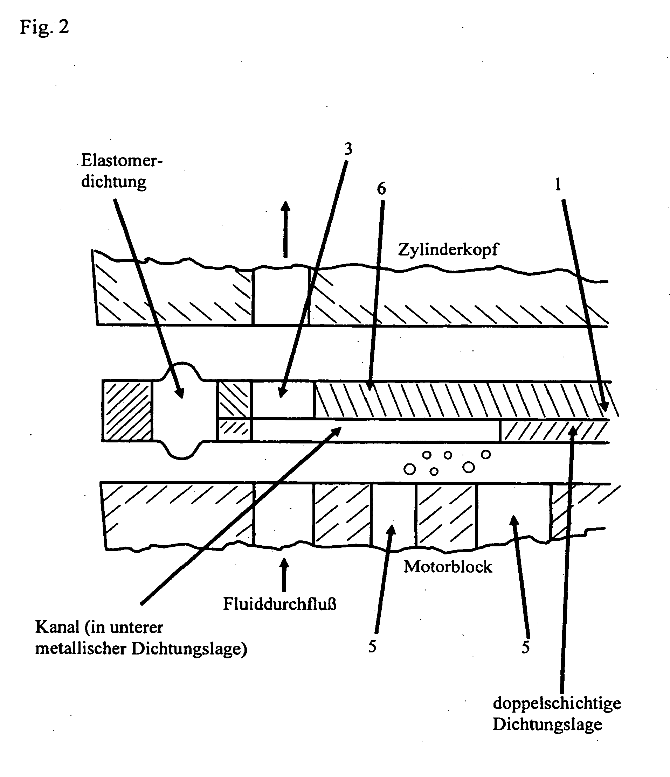

- Fig. 2: zeigt eine Schnittansicht der Zylinderkopfdichtung von Fig. 1.
- Fig. 3: zeigt eine Ansicht einer Zylinderkopfdichtung gemäß der Erfindung als Blocksansicht.
- Fig. 4: zeigt einen Querschnitt entlang der Linie x-x von Fig. 3

Erfindungsgemäß wird eine Zylinderkopfdichtung bereitgestellt, die mindestens eine Dichtungslage 1 aus Metall, mindestens eine Brennraumabdichtung, Öffnungen 2 um die Brennkammern und eine um die Brennraumabdichtung(en) verlaufende Elastomerdichtung umfasst. Die Zylinderkopfdichtung umfaßt weiterhin mindestens einen Kanal 4, der in der Ebene der Zylinderkopfdichtung in mindestens einer Dichtungslage verläuft und der eine Fluidöffnung 3 schneidet. Die Zylinderkopfdichtung ist weiterhin dadurch gekennzeichnet, dass die Dichtung im Bereich der Öffnungen als Blende (6) fungiert, und der Kanal aus elastomerem Material gebildet ist.

Die Herstellung metallischer Dichtungen ist dem Fachmann gut bekannt und kann gemäß der jeweiligen Spezifikationen und Anforderungen mittels beispielsweise einer CNC-Maschine durchgeführt werden. Die metallische Dichtungslage kann beispielsweise durch Falzen oder Pressen des jeweiligen Metalls, beispielsweise aus verschiedenen Stählen oder Magnesium, hergestellt werden. Die Brennraumabdichtung umschließt dichtend einen Hochdruckbereich, wie beispielsweise einen Zylinder oder Zylinderlaufbuchse, um ein Austreten der Verbrennungsgase zu vermeiden. Die Abdichtung des Brennraums erfolgt beispielsweise mittels einer oder mehrerer Sicken in mindestens einer der metallischen Dichtungslage(n). Die Ausbildung von Sicken ist dem Fachmann bekannt und umfasst beispielsweise entsprechendes Falzen oder Pressen des Metalls der Dichtungslage(n).

Um die Brennraumabdichtung verläuft weiterhin eine Elastomerdichtung beispielsweise bestehend aus Silikonen, Fluorsilikonen, Fluorelastomeren, Fluorthermoplasten, Polyetheretherketonen (PEEK), Polyphenylensulfid (PSU), Polyamidimid (PAI) und eigenverstärkten flüssigkristallinen Polymeren (LCP). Das Elastomer wird in Form einer Beschichtung auf mindestens einer Dichtungslage aufgebracht, wobei die Dichtungslage mit einem oder mehreren das Elastomermaterial aufnehmenden Prägebereichen versehen ist. Die Herstellung des Prägebreichs kann beispielsweise durch Falzen oder Pressen des Dichtungslagenmaterials erfolgen. Zum Aufbringen des Elastomermateriales in den Prägebereich kommt beispielsweise das so genannte Liquid-Elastomer-Moulding (LEM)-Verfahren zum Einsatz, welches in der US-B 6,530,575 beschrieben wird. Andere Verfahren zum Aufbringen der Elastomerbeschichtung sind aus dem Stand der Technik bekannt. Geeignet ist hierbei der Siebdruck, bei dem das Material selbst oder aber Dispersionen des Materials aufgetragen werden. Ebenso ist ein Spritzgussverfahren für das Aufbringen der Elastomerbeschichtung gut geeignet.

Die Kühlmittel-Öffnung 3, in der der mindestens eine Kanal 4 mündet, stellt hierbei einen Niederdruckbereich dar und ermöglicht ein Ableiten von möglicherweise angesammelten Gasen und/oder Luft aus dem Motorblock, ohne dass eine Verteilung stattfindet. Die Öffnung 3 des Fluiddurchflusses kann partiell (mit Ausnahme des einfließenden Kanals) zur Abdichtung nach einer oder mehrerer Seiten mit einem geeigneten Dichtungsmittel versehen sein, wie beispielsweise einer Elastomerdichtung. Durch das strömende Fluid entsteht weiterhin eine Sogwirkung, die den Abtransport von Luft und/oder Gasen durch den mindestens einen Kanal begünstigt. Die Luft und/oder Gase können sich ihrerseits in dem Fluid lösen.

In dem Bereich bzw. in der Ebene der Zylinderkopfdichtung, zwischen der Elastomerdichtung und der Brennraumabdichtung können Gase und/oder Luft entstehen, die die Wirkungsweise des Motors nachteilig beeinflussen. Beispielsweise kann bei dem Befüllen des Motors mit Kühlmittel gleichzeitig mit eingebrachte Luft in dem Bereich vorliegen und beim späteren Betrieb des Motors zu Ablagerung an den Dichtungen und zu Undichtigkeiten der Elastomerdichtung oder der Brennraumabdichtung führen.

Durch den mindestens einen in dem Bereich gebildeten Kanal 4 wird nun bei der vorliegenden Erfindung eine Möglichkeit zur Abführung dieser Gase und/oder Luft über die Öffnung 3 eines Fluiddurchflusses geschaffen. Von Vorteil ist hierbei weiterhin, dass bei eventuellen Undichtigkeiten der Brennraumabdichtung austretende heiße Verbrennungsgase sich nicht in der Ebene der Zylinderkopfdichtung ansammeln und Dichtungsmaterial oder metallische Bauteile beschädigen, sondern ebenfalls gezielt in einen Bereich abgeleitet werden, in dem keine nachteiligen Auswirkungen auftreten können. Ein derartiger Kanal oder Kanäle können mittels dem Fachmann bekannter Verfahren, einschließlich Stanzen, Fräsen, Prägen oder einer Kombination dieser Verfahren, in der Ebene der Zylinderkopfdichtung in mindestens einer Dichtungslage erzeugt werden. Es sollte weiterhin klar sein, dass der mindestens eine Kanal 4 in der Ebene der Zylinderkopfdichtung derart ausgebildet ist, dass keine Beeinträchtigung der Dichtungsfunktion der Brennraumabdichtung auftritt, d.h. dass der Kanal in einem ausreichenden Abstand von der Dichtung ausgebildet ist, um eine einwandfreie Funktion derselben zu gewährleisten.

Gemäß der vorliegenden Erfindung schneidet ein Ende des mindestens einen Kanals ein Fluidloch 5 des im Betrieb darunterliegenden Motorblocks und erzeugt somit eine Verbindung zwischen beispielsweise zwei Fluidöffnungen, wodurch ebenfalls eine verbesserte Entgasung ermöglicht wird.

Gemäß der Erfindung ist die Öffnung 3 ein Kühlmitteldurchfluss. Beispiele für entsprechend Kühlmittel sind Wasser und/oder Öl, für die bereits Bohrungen in dem Motorblock und dem Zylinderkopf vorhanden sind. Bevorzugt wird ein bereits vorhandener Wasserdurchfluss als ein Endpunkt des mindestens einen Kanals verwendet.

Gemäß nicht-erfindungsgemäßen Ausführungsformen ist der mindestens eine Kanal 4 in die Dichtungslage aus Metall gestanzt, gefräst und/oder geprägt. Entsprechende Verfahren hierfür sind dem Fachmann bekannt und können bei Bedarf auch kombiniert werden.

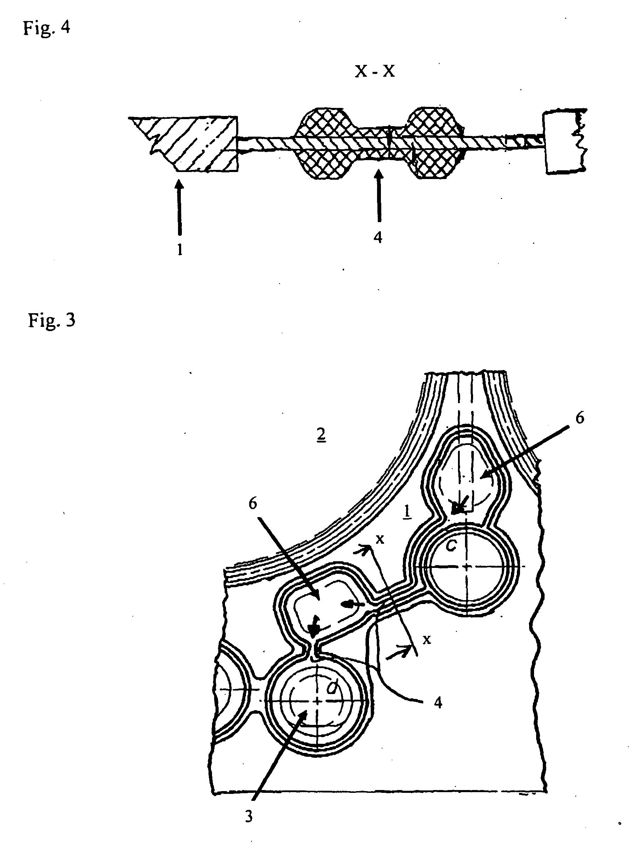

In der in den Figuren 3 und 4 gezeigten erfindungsgemäßen Ausführungsform ist auf der Dichtungslage 1 aus Metall beidseitig ein Elastomer-Material aufgetragen, das den Kanal 4 durch eine in dem Elastomer-Material vorgesehene Vertiefung bzw. Nut bildet. Dadurch kann das Fluid entlang der in Fig. 3 abgebildeten Pfeile strömen, und zwar beispielsweise von dem Fluidloch 5 zu der Fluid-Öffnung 3. Die Dichtung wirkt demnach in dem Bereich der Öffnungen bzw. Löcher wie eine Blende 6, die zusammen mit dem Kanal 4 einen Strömungspfad für das zu leitende Fluid bildet. Um das Elastomer-Material aufnehmen zu können, ist die Dichtungslage 1 bevorzugt verdünnt bzw. vertieft, wie in Fig. 4 zu sehen.

Gemäß einer bevorzugten Ausführungsform der vorliegenden Erfindung weist die mindestens eine Dichtungslage aus Metall eine Schichtdicke von 0,2 bis 4,0 mm, bevorzugt 0,8 bis 2,2 mm und mehr bevorzugt 1,2 bis 2,0 mm auf.

Gemäß einer weiteren bevorzugten Ausführungsform weist der mindestens eine Kanal bzw. die Vertiefung in dem Metall der Dichtungslage eine Tiefe von 0,05 bis 0,5 mm und eine Breite von 0,01 bis 0,5 mm auf. Bevorzugte Abmessungen des mindestens einen Kanals sind eine Tiefe von 0,08 bis 0,2 mm und eine Breite von 0,01 bis 0,2 mm. Noch bevorzugter sind eine Tiefe von 0,1 bis 0,15 mm und eine Breite von 0,1 bis 0,15 mm. Es sollte hierbei klar sein, dass die Kanaltiefe in Abhängigkeit von der Schichtdicke der Dichtungslage gewählt wird, so dass die gewählte Kanaltiefe stets kleiner als die Schichtdicke der Dichtungslage ist.

Gemäß einer noch weiteren bevorzugten Ausführungsform sind mindestens zwei Dichtungslagen vorhanden, die aus verschiedenen Metallen bestehen. Bei dem Metall kann es sich beispielsweise um einen Stahl, wie Federstahl oder Edelstahl, oder um Magnesium oder Aluminium handeln. Aus Gründen unterschiedlicher thermischer Ausdehnungskoeffizienten des gewählten Metalls kann es günstig sein kombinierte Lagen verschiedener Metalle zu wählen, die dem Fachmann bekannt sind.

Gemäß einer weiteren Ausführungsform ist das Metall ein Stahl, wie beispielsweise Federstahl oder ein Edelstahl, wie V4 Stahl.

Gemäß einer noch weiteren Ausführungsform der vorliegenden Erfindung ist die mindestens eine Brennraumabdichtung aus einer oder mehreren Sicken gebildet. Die Abdichtung um eine Brennraumöffnung herum erfolgt hierbei im wesentlichen durch die die Brennraumöffnung umschließende Abdichtsicke, welche zur Aufrechterhaltung einer einwandfreien Abdichtung wegen der vorstehend beschriebenen Dichtspaltänderungen dauerhaft federelastische Eigenschaften aufweisen sollte, das heißt die Abdichtsicke muss auch noch nach langer Motorbetriebsdauer in Richtung senkrecht zur Dichtungsplattenebene federelastisch verformbar sein.

Gemäß einer weiteren Ausführungsform besteht das Material der Elastomerdichtung aus Silikonen, Fluorsilikonen, Fluorelastomeren, Fluorthermoplasten, Polyetheretherketonen (PEEK), Polyphenylensulfid (PSU), Polyamidimid (PAI) und eigenverstärkten flüssigkristallinen Polymeren (LCP). Bevorzugte Materialien sind hierbei Fluorsilikone, Fluorelastomere oder Fluorthermoplaste.

Gemäß einer noch weiteren Ausführungsform weist die Zylinderkopfdichtung Verformungsbegrenzer auf die um die entsprechenden Dichtungen, Elastomerdichtung und/oder Brennraumabdichtung, angeordnet sind.

Der Verformungsbegrenzer begrenzt die mögliche Verformung der jeweiligen Dichtung, beispielsweise einer Abdichtsicke. Das heißt der Federweg der Sicke wird begrenzt, wodurch die Abdichtsicke vor einer unzulässig hohen Verformung geschützt wird. Ein derartiger Verformungsbegrenzer wird auch als Stoppen bezeichnet. Häufig hat ein solcher Stoppen die Gestalt eines metallischen Kreisrings, welcher radial außerhalb oder radial innerhalb der Abdichtsicke auf diejenige Metalllage aufgebracht wurde, in welcher die Abdichtsicke ausgebildet ist; bei einer mehrlagigen Dichtungsplatte kann der Stoppen auch auf eine der besagten Blechlage benachbarte Blechlage so aufgebracht sein, dass er bei eingespannter Zylinderkopfdichtung gegen die mit der Abdichtsicke versehene Blechlage anliegt, und zwar radial innerhalb oder radial außerhalb dieser Sicke. Aus dem Stand der Technik sind weitere Beispiele für derartige Stoppen bekannt, wie aus der US-5 713 580. Die Gestaltung und Herstellung von geeigneten Verformungsbegrenzern sind dem Fachmann gut bekannt.

Es sollte klar sein, dass die erfindungsgemäße Zylinderkopfdichtung nicht nur bei der Herstellung von Motoren für Automobile, sondern auch von anderen Verbrennungsmotoren verwendet werden kann. Der Herstellung der erfindungsgemäße Zylinderkopfdichtung kann darüber hinaus mit den gleichen Werkzeugen wie für Zylinderkopfdichtungen gemäß dem Stand der Technik erfolgen, da lediglich eine Stationsvariante im Werkzeug für die Ausbildung des Kanals notwendig ist.

## Patentansprüche

1. Zylinderkopfdichtung, umfassend:
mindestens eine Dichtungslage (1) aus Metall,
mit Öffnungen (2) für die Brennkammern;
mindestens eine Brennraumabdichtung um die Öffnungen (2) herum; und
mindestens eine, in der Metall-Dichtungslage (1) gebildete Kühlmittel-Öffnung (3) für die Durchführung von Kühlfluid;
wobei in der Ebene der Zylinderkopfdichtung mindestens ein Kanal (4) in der mindestens einen Dichtungslage (1) gebildet ist, der die Kühlmittel-Öffnung (3) schneidet,
**dadurch gekennzeichnet, dass**
die Dichtung im Bereich der Öffnungen als Blende (6) fungiert, und
der Kanal (4) aus elastomerem Material gebildet ist.

2. Zylinderkopfdichtung nach Anspruch 1, worin die mindestens eine Dichtungslage (1) aus Metall eine Materialstärke von 0,2 bis 4,0 mm aufweist.

3. Zylinderkopfdichtung nach Anspruch 1 oder 2, worin der mindestens eine Kanal eine Tiefe von 0,05 bis 0,5 mm und eine Breite von 0,01 bis 0,5 aufweist.

4. Zylinderkopfdichtung nach einem der vorstehenden Ansprüche, **gekennzeichnet durch** mindestens zwei Dichtungslagen, die aus verschiedenen Metallen bestehen.

5. Zylinderkopfdichtung nach einem der vorstehenden Ansprüche, worin das Metall der Dichtungslage (1) Stahl ist.

## Claims

1. Cylinder head gasket, comprising:
at least one sealing layer (1) of metal;
with openings (2) for the combustion chambers;
at least one combustion chamber sealing around the openings (2); and
at least one cooling fluid opening (3) formed in the metal sealing layer (1) for the passage of cooling fluid;
wherein at least one channel (4) is formed in the at least one sealing layer (1), in the plane of the cylinder head gasket, intersecting said cooling fluid opening (3);
**characterized in that**
in the area of said openings, said gasket acts as a panel (6); and
the channel (4) is made of elastomeric material.

2. Cylinder head gasket according to claim 1, wherein the at least one sealing layer (1) of metal has a material thickness of 0.2 to 4.0 mm.

3. Cylinder head gasket according to claim 1 or 2, wherein the at least one channel has a depth of 0.05 to 0.5 mm und a width of 0.01 to 0.5.

4. Cylinder head gasket according to one of the preceding claims, **characterized by** at least two sealing layers of different metals.

5. Cylinder head gasket according to one of the preceding claims, wherein the metal of the sealing layer (1) is steel.

## Revendications

1. Joint de culasse, comportant :
au moins une couche d'étanchéité (1) en métal,
avec des orifices (2) pour les chambres de combustion ;
au moins une garniture d'étanchéité de la chambre de combustion autour des orifices (2) ; et
au moins un orifice (3), formé dans la couche d'étanchéité (1) en métal, pour le passage du fluide de refroidissement ;
au moins un conduit (4) étant formé dans le plan du joint de culasse dans ladite au moins une couche d'étanchéité (1), lequel coupe l'orifice (3) pour le fluide de refroidissement,
**caractérisé en ce que**
le joint dans la zone des orifices fait fonction d'obturateur (6), et
le conduit (4) est réalisé dans un matériau élastomère.

2. Joint de culasse selon la revendication 1, dans lequel ladite au moins une couche d'étanchéité (1) en métal possède une épaisseur de matériau de 0,2 à 4,0 mm.

3. Joint de culasse selon la revendication 1 ou 2, dans lequel ledit au moins un conduit a une profondeur de 0,05 à 0,5 mm et une largeur de 0,01 à 0,5.

4. Joint de culasse selon l'une quelconque des revendications précédentes, **caractérisé par** au moins deux couches d'étanchéité qui sont réalisées dans des métaux différents.

5. Joint de culasse selon l'une quelconque des revendications précédentes, dans lequel le métal de la couche d'étanchéité (1) est l'acier.
